# EUROPEAN PATENT APPLICATION

(11) **EP 4 761 221 A1**
(43) Date of publication of application: **17.06.2026**
(21) Application number: 24867302.2
(22) Date of filing: 05.09.2024
(51) Int. Cl.: H04L 67/568

(54) **DATA TRANSMISSION SYSTEM**

(30) Priority: 20.09.2023 CN 202311222163
(71) Applicant: HUAWEI TECHNOLOGIES CO., LTD., Shenzhen 518129 (CN)
(72) Inventor: MENG, Wanhong, Shenzhen, Guangdong 518129 (CN); LIU, Xinchao, Shenzhen, Guangdong 518129 (CN); ZHANG, Peng, Shenzhen, Guangdong 518129 (CN); CHEN, Yufang, Shenzhen, Guangdong 518129 (CN)
(74) Representative: Isarpatent
(86) International application number: PCT/CN2024/117018
(87) International publication number: WO 2025/060890

(57) **Abstract**

This application discloses a data transmission system applied to long-distance transmission of data with a large data amount. A plurality of data transmission subsystems connected to each other through a high-bandwidth data transmission link are set in the data transmission system. The data transmission subsystem is further connected to a low-bandwidth data access link, and an apparatus for temporary data storage is further disposed in the data transmission subsystem, so that external data obtained through the data access link can be buffered. In a data transmission process, the data transmission subsystem receives the external data through the data access link, first buffers the external data in the apparatus for temporary data storage, and then transmits, through the high-bandwidth data transmission link, the data buffered in the apparatus for temporary data storage, to ensure that the buffered data can be transmitted through the data transmission link at a time in a centralized manner, avoid mutual interference between different data streams, ensure high bandwidth utilization of the data transmission link, implement transmission link sharing, reduce data transmission costs, and improve data transmission efficiency.

## Description

This application claims priority to Chinese Patent Application No. 202311222163.X, filed with the China National Intellectual Property Administration on September 20, 2023, and entitled "DATA TRANSMISSION SYSTEM", which is incorporated herein by reference in its entirety.

### TECHNICAL FIELD

This application relates to the field of communication technologies, and in particular, to a data transmission system.

### BACKGROUND

With development of science and technology and advent of a big data era, an amount of data to be transmitted through a network increases explosively. For example, shooting data of a film and television base needs to be transmitted to a post-production center for storage and processing. For another example, scientific research data such as genetic data, meteorological data, or astronomical data needs to be transmitted to a remote storage center or computing center for processing.

In a big data transmission scenario, a data amount of a data stream is usually large, and a transmission distance of the data stream may also be usually long. For example, in some cross-provincial data transmission scenarios, a transmission distance of a data stream may be at least thousands of kilometers. In a scenario of long-distance transmission with a large data amount, when a data stream is transmitted through an existing network, because a bandwidth of the network is limited, and different data streams compete for network transmission resources, transmission efficiency of the data stream is low.

### SUMMARY

This application provides a data transmission system, so that high bandwidth utilization of a data transmission link can be ensured, to improve data transmission efficiency.

A first aspect of this application provides a data transmission system, including a plurality of data transmission subsystems, where the plurality of data transmission subsystems are connected to each other through a data transmission link. Any two data transmission subsystems in the data transmission system are directly connected to each other through the data transmission link; or some data transmission subsystems in the data transmission system are not directly connected to each other through the data transmission link, but are connected to each other through another data transmission subsystem.

A first data transmission subsystem of the plurality of data transmission subsystems is further connected to one or more data access links, and a bandwidth of each data access link is lower than a bandwidth of a data transmission link connected to the first data transmission subsystem. That is, a rate at which data is transmitted to the first data transmission subsystem through a single data access link is lower than a rate at which the rate is transmitted to the first data transmission subsystem through the data transmission link. The first data transmission subsystem is, for example, any one of the plurality of data transmission subsystems.

The first data transmission subsystem includes an apparatus for temporary data storage, where the apparatus for temporary data storage is configured to buffer data received through the data access link, and the first data transmission subsystem is configured to send, through the data transmission link connected to the first data transmission subsystem, the data buffered in the apparatus for temporary data storage. For example, a user may first inject the data into the apparatus for temporary data storage in the first data transmission subsystem through the data access link. After user data buffered in the apparatus for temporary data storage reaches a specific amount, the first data transmission subsystem transmits the user data at a high speed through the data transmission link. In addition, the user data may alternatively be directly transmitted at a high speed through the data transmission link without being buffered.

In this solution, the plurality of data transmission subsystems connected to each other through the high-bandwidth data transmission link are set in the data transmission system. The data transmission subsystem is further connected to a low-bandwidth data access link, and an apparatus for temporary data storage is further disposed in the data transmission subsystem, so that external data obtained through the data access link can be buffered. In this way, in a data transmission process, the data transmission subsystem receives the external data through the data access link, first buffers the external data in the apparatus for temporary data storage, and then transmits, through the high-bandwidth data transmission link, the data buffered in the apparatus for temporary data storage. Because the data transmission link is used to transmit the data buffered in the apparatus for temporary data storage, the buffered data can be transmitted through the data transmission link at a time in a centralized manner, to avoid mutual interference between different data streams, ensure high bandwidth utilization of the data transmission link, and improve data transmission efficiency.

In a possible implementation, the first data transmission subsystem is configured to send, when a data amount of target data buffered in the apparatus for temporary data storage is greater than a first threshold, the target data through the data transmission link connected to the first data transmission subsystem, where the target data includes data belonging to a same data transmission service. The data belonging to the same data transmission service may be data that is requested by a same user to transmit and that has a same destination address, that is, data in a same data stream.

In other words, for the data in the same data stream, the first data transmission subsystem first buffers the data in the data stream by using the apparatus for temporary data storage, and sends the buffered data to another data transmission subsystem through the data transmission link after the buffered data reaches a specific data amount, so that the high-bandwidth data transmission link can be fully loaded to a greatest extent to transmit the data in the same data stream, to ensure high bandwidth utilization of the data transmission link and improve data transmission efficiency.

In a possible implementation, the first threshold is related to a bandwidth of the data transmission link connected to the first data transmission subsystem. Usually, the first threshold has a positive correlation relationship with the bandwidth of the data transmission link. That is, a larger bandwidth of the data transmission link indicates a larger first threshold, and a smaller bandwidth of the data transmission link indicates a smaller first threshold.

When a data amount of the same data stream is large, the first threshold related to the bandwidth of the data transmission link is set, so that the data in the same data stream is sent intermittently through the data transmission link or is transmitted through the data transmission link at a time. To be specific, the data in the same data stream is continuously transmitted through the data access link to the first data transmission subsystem for buffering, and the first data transmission subsystem triggers data transmission only when the buffered data reaches the specific amount, to ensure that as few data streams are transmitted as possible in one time period, avoid mutual interference between the data streams, and ensure that the data transmission link consistently maintains high bandwidth utilization. In addition, the data transmission subsystem alternatively supports transmitting, after the user data is all buffered, the user data at a time point specified by the user.

In a possible implementation, the apparatus for temporary data storage includes a plurality of data storage devices, each of the plurality of data storage devices is configured to store a part of the target data, and the first data transmission subsystem is configured to read the target data from the plurality of data storage devices in parallel and transmit the target data through the data transmission link connected to the first data transmission subsystem. In this way, a rate at which the first data transmission subsystem reads the target data is actually a sum of read rates of the plurality of data storage devices, to ensure that the data read rate can match the transmission rate of the data transmission link, and avoid impact of the data read rate on an actual data transmission rate.

In a possible implementation, when the data amount of the target data is greater than the bandwidth of the data transmission link connected to the first data transmission subsystem, the data transmission link connected to the first data transmission subsystem is used to transmit only the target data in a time period for transmitting the target data.

In other words, the data transmission link is exclusively used in the transmission time period of the target data, and the data transmission link transmits only the data of the same data transmission service within the same time. This ensures that the data transmission link can be fully loaded to transmit the data of the same data transmission service, to avoid interference caused when a plurality of data streams are simultaneously transmitted, and improve data transmission efficiency of the data transmission link.

In a possible implementation, the data access link includes one or more of the following links: a wired network access link, a wireless network access link, a network dedicated line access link, and a hard disk access link. In other words, the user may access the data transmission subsystem through a plurality of different links, to select a corresponding link according to an actual requirement to transmit data to the data transmission subsystem.

In a possible implementation, when the data access link includes the hard disk access link, the first data transmission subsystem is further configured to read data through the hard disk access link and forward the read data based on the data transmission link connected to the first data transmission subsystem. In other words, when the first data transmission subsystem has the hard disk access link, the first data transmission subsystem may directly read, through the hard disk access link, data in a hard disk provided by the user, and further forward, through the data transmission link, the data read through the hard disk access link, to omit an operation of buffering the read data in the apparatus for temporary data storage.

In a possible implementation, the first data transmission subsystem is further configured to receive, through the data transmission link connected to the first data transmission subsystem, data sent by another data transmission subsystem, and forward, through the data access link, the data received through the data transmission link connected to the first data transmission subsystem. For example, after receiving, through the data transmission link, the data sent by the another data transmission subsystem, the first data transmission subsystem forwards, through the data access link such as the wired network access link or the wireless network access link, the data received from the another data transmission subsystem, so that the user can receive, through the data access link such as the wired network access link or the wireless network access link, the data transmitted through the data transmission system.

In a possible implementation, the apparatus for temporary data storage is further configured to buffer the data received by the first data transmission subsystem through the data transmission link connected to the first data transmission subsystem. In other words, after the data transmitted by the user through the data transmission system reaches a destination data transmission subsystem, the data can be further buffered in a source data transmission subsystem and the destination data transmission subsystem, that is, to implement hosting of the data in the source data transmission subsystem and the destination data transmission subsystem, so that the user can retrieve the data from the destination data transmission subsystem as required.

In a possible implementation, the data transmission system further includes a management and operation system, and the management and operation system is connected to the plurality of data transmission subsystems. The first data transmission subsystem is configured to send a data transmission request to the management and operation system, where the data transmission request is used to request to transmit first data, and the data transmission request includes a size of the first data and a destination address of the first data. The management and operation system is configured to send a data reception request to a second data transmission subsystem based on the data transmission request, where the data reception request is used to request the second data transmission subsystem to receive the first data. The management and operation system is further configured to send a data transmission instruction to the first data transmission subsystem after receiving a data reception confirmation message returned by the second data transmission subsystem, where the data transmission instruction instructs the first data transmission subsystem to transmit the first data.

In this solution, a data scheduling center is set in the data transmission system to schedule data transmission between the data transmission subsystems, so that the data transmission subsystems can more properly use the data transmission link between each other to transmit data, to avoid mutual contention between the data transmission subsystems for data transmission link resources, effectively ensure high bandwidth utilization of the data transmission link, and improve data transmission efficiency.

In a possible implementation, the destination address of the first data includes a plurality of addresses. For example, the destination address of the first data includes a plurality of data transmission subsystems. The management and operation system is configured to send data reception requests to the plurality of data transmission subsystems based on the data transmission request. That is, the management and operation system sends the data reception requests to the plurality of data transmission subsystems corresponding to the plurality of addresses indicated by the data transmission request, to request these data transmission subsystems to receive the first data from the first data transmission subsystem. Finally, the management and operation system may indicate, based on data reception confirmation messages returned by the plurality of data transmission subsystems, the first data transmission subsystem to send the first data to the plurality of data transmission subsystems.

In this solution, based on the data transmission link in the data transmission system, data received by one data transmission subsystem can be quickly transmitted to a plurality of other data transmission subsystems, to implement efficient data distribution, and meet a data distribution requirement in a specific scenario.

In a possible implementation, the first data transmission subsystem is further configured to obtain a data transmission instruction delivered by the user. The data transmission instruction instructs to transmit the first data, and the data transmission instruction includes the size of the first data, the destination address of the first data, a transmission time point of the first data, a transmission time limit of the first data, and authorized-hosting information of the first data. The transmission time point of the first data is a time point at which transmission of the first data needs to be started, and the transmission time limit of the first data is a time within which the first data needs to be transmitted to the destination address. For example, the first data needs to be transmitted to the destination address within one week. The authorized-hosting information of the first data is information that the user authorizes the data transmission subsystem to host the first data, to ensure that the source data transmission subsystem and the destination data transmission subsystem of the first data can temporarily store and host the first data. In addition, the first data transmission subsystem is further configured to determine a transmission priority of the first data based on the transmission time point of the first data and the transmission time limit of the first data. Specifically, when the transmission time limit of the first data is shorter, the transmission priority of the first data is higher, and the first data transmission subsystem sends the data transmission request for the first data to the management and operation system more preferentially, to ensure that the first data can be transmitted soon to a greatest extent.

In a possible implementation, the data transmission link between the plurality of data transmission subsystems is an optical transport network (optical transport network, OTN) link having a high bandwidth value. For example, a bandwidth of any data transmission link is, for example, 100 Gbps, 400 Gbps, 800 Gbps, or 1600 Gbps.

### BRIEF DESCRIPTION OF DRAWINGS

FIG. 1 is a diagram of a structure of a data transmission system according to an embodiment of this application;
FIG. 2 is a diagram of reading data and transmitting the data through a data transmission link according to an embodiment of this application;
FIG. 3 is a comparison diagram of network topologies according to an embodiment of this application;
FIG. 4 is a diagram of a structure of a data transmission subsystem according to an embodiment of this application;
FIG. 5 is a diagram of a data macroblock according to an embodiment of this application;
FIG. 6 is a diagram of node routing according to an embodiment of this application;
FIG. 7 is a diagram in which a user submits data to a data transmission subsystem for transmission according to an embodiment of this application;
FIG. 8 is a diagram of data transmission in a data transmission system according to an embodiment of this application;
FIG. 9 is a diagram of data transmission in an "eastern data, western computing" scenario according to an embodiment of this application;
FIG. 10 is a diagram of data transmission in a data center interconnection scenario according to an embodiment of this application;
FIG. 11A is a diagram of conventional digital content delivery according to an embodiment of this application;
FIG. 11B is a diagram of implementing data content delivery based on a data transmission system according to an embodiment of this application; and
FIG. 12 is a diagram of a structure of an electronic device according to an embodiment of this application.

### DESCRIPTION OF EMBODIMENTS

The following describes embodiments of this application with reference to the accompanying drawings. It is clear that the described embodiments are merely some rather than all of the embodiments of this application. A person of ordinary skill in the art can know that the technical solutions provided in embodiments of this application are also applicable to similar technical problems with development of technologies and emergence of a new scenario.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein.

Moreover, the terms "include", "contain" and any other variants mean to cover the non-exclusive inclusion. For example, a process, method, system, product, or device that includes a list of steps or modules is not necessarily limited to those expressly listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

With development of science and technology and advent of a big data era, an amount of data to be transmitted through a network increases explosively, and an increasing amount of big data needs to be transmitted over a long distance. For example, in a new concept of "eastern data, western computing", data in the east of the country needs to be transmitted to the west of the country in order for computing and processing. An eastern data center focuses on processing services that have a high network requirement, such as industrial Internet, financial securities, disaster warning, telemedicine, video call, and artificial intelligence reasoning. A western data center focuses on processing services that do not have a high network requirement, such as background processing, offline analysis, and storage backup. A scenario of separation of data production and processing across areas will become increasingly common.

Long-distance transmission of massive data across areas poses great challenges to conventional data transmission networks (such as a wide area network). Because a bandwidth of the conventional data transmission network is limited, burst traffic on the data transmission network is large, and different data streams contend for network resources and interfere with each other, the data transmission network usually reserves a specific bandwidth to cope with the burst traffic and resource contention between the data streams. Consequently, bandwidth utilization of the data transmission network is low, and transmission efficiency of the data streams is low. In addition, in a long-distance transmission scenario, when a data stream with a large data amount is transmitted through the conventional data transmission network, the data stream usually passes through a large quantity of forwarding devices (for example, devices such as a switch and a router in each area). When forwarding data, these forwarding devices need to perform table lookup and forwarding. As a result, the data stream undergoes table lookup and forwarding a large quantity of times in a transmission process, which affects transmission efficiency of the data stream. In addition, although a problem of data transmission efficiency can be alleviated to some extent when an enterprise user uses a dedicated line network to transmit a large amount of data, the dedicated line network requires high costs, which are usually difficult for the enterprise user to afford.

In view of this, this application provides a data transmission system. A plurality of data transmission subsystems connected to each other through a high-bandwidth data transmission link are set in the data transmission system. The data transmission subsystem is further connected to a low-bandwidth data access link, and an apparatus for temporary data storage is further disposed in the data transmission subsystem, so that external data obtained through the data access link can be buffered. In this way, in a data transmission process, the data transmission subsystem receives the external data through the data access link, first buffers the external data in the apparatus for temporary data storage, and then transmits, through the high-bandwidth data transmission link, the data buffered in the apparatus for temporary data storage. Because a bandwidth of the data transmission link is far higher than a bandwidth of the data access link, and the data transmission link is used to transmit the data buffered in the apparatus for temporary data storage, the buffered data can be transmitted through the data transmission link at a time in a centralized manner, to avoid mutual interference between different data streams, ensure consistently high bandwidth utilization of the data transmission link, and improve data transmission efficiency.

The following describes in detail a data transmission system provided in embodiments of this application with reference to the accompanying drawings.

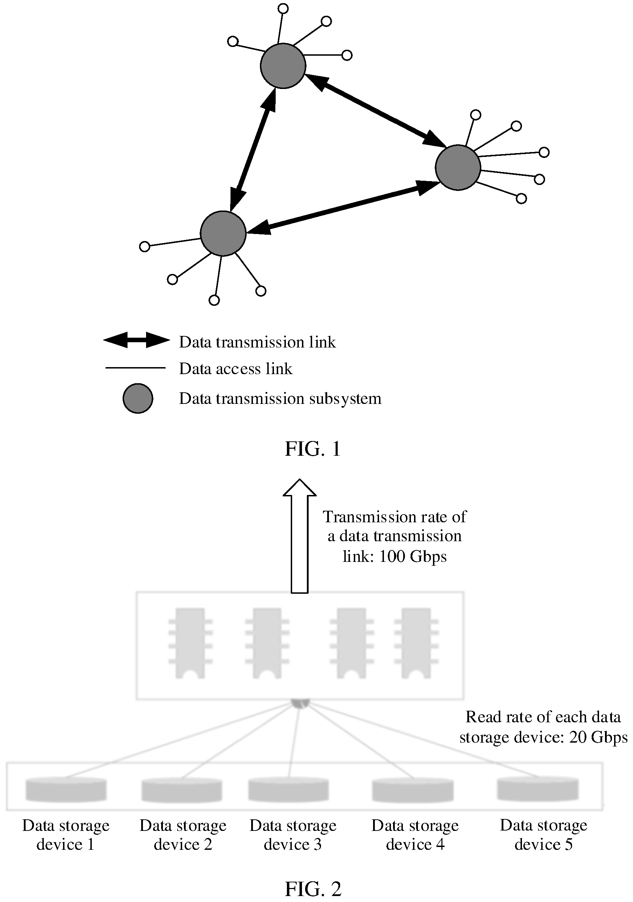

FIG. 1 is a diagram of a structure of a data transmission system according to an embodiment of this application. As shown in FIG. 1, the data transmission system includes a plurality of data transmission subsystems, and the plurality of data transmission subsystems are connected to each other through data transmission links. For any data transmission subsystem, the data transmission subsystem is, for example, a network device (for example, a server or a switch) that exists in a form of cabinet, or a device cluster that includes a plurality of network devices. A representation form of the data transmission subsystem is not specifically limited in embodiments.

The data transmission links used to connect the data transmission subsystems have a high bandwidth, that is, can implement data transmission at a high rate. For example, the data transmission links between the plurality of data transmission subsystems are optical transport network links. In other words, the plurality of data transmission subsystems are connected to each other through high-speed optical fibers. A bandwidth of any data transmission link is, for example, 100 Gbps, 400 Gbps, 800 Gbps, or 1600 Gbps.

In some possible embodiments, any two data transmission subsystems in the data transmission system are directly connected to each other through the data transmission link. For example, for any data transmission subsystem in the data transmission system, the data transmission subsystem is directly connected to any other data transmission subsystem through the data transmission link.

In some other possible embodiments, some data transmission subsystems in the data transmission system are not directly connected to each other through the data transmission link, but are connected to each other through another data transmission subsystem. For example, for a data transmission subsystem 1, the data transmission subsystem 1 is directly connected to a data transmission subsystem 2 through a data transmission link 1, and the data transmission subsystem 2 is directly connected to a data transmission subsystem 3 through a data transmission link 2. Therefore, the data transmission subsystem 1 and the data transmission subsystem 3 are actually connected to each other through the data transmission subsystem 2.

A first data transmission subsystem of the plurality of data transmission subsystems (where the first data transmission subsystem may be any one of the plurality of data transmission subsystems) is used as an example. The first data transmission subsystem is further connected to a data access link, and the data access link is used to receive data that needs to be transmitted through the data transmission system. A bandwidth of the data access link connected to the first data transmission subsystem is lower than a bandwidth of a data transmission link connected to the first data transmission subsystem. In other words, for the data transmission subsystem in the data transmission system, the data transmission subsystem is connected to an external network through a low-bandwidth data access link (for example, a link in a conventional network), to obtain, through the external network, data that needs to be transmitted; and the data transmission subsystems are connected to each other through the high-bandwidth data transmission links, to implement high-speed data transmission between the data transmission subsystems.

In addition, the first data transmission subsystem further includes an apparatus for temporary data storage, where the apparatus for temporary data storage is configured to buffer the data received through the data access link, and the first data transmission subsystem is configured to send, through the data transmission link connected to the first data transmission subsystem, the data buffered in the apparatus for temporary data storage. Because the bandwidth of the data access link connected to the first data transmission subsystem is low, and the bandwidth of the data transmission link used by the first data transmission subsystem to transmit data is high, the first data transmission subsystem may first buffer the data received through the data access link, and send the data through the data transmission link after the buffered data reaches a specific data amount, to ensure that the buffered data can be transmitted through the data transmission link at a time in a centralized manner, avoid mutual interference between different data streams, and ensure high bandwidth utilization of the data transmission link.

In addition, because the apparatus for temporary data storage is disposed in the first data transmission subsystem, the apparatus for temporary data storage may be used as a buffer of burst traffic, to pre-inject a large amount of data that needs to be transmitted, ensure that the data transmission link consistently maintains high bandwidth utilization, avoid a phenomenon that the data transmission link is sometimes congested and sometimes idle, and ensure data transmission efficiency.

After the first data transmission subsystem transmits the data to a destination data transmission subsystem, the destination data transmission subsystem sends the received data to an actual destination address of the data. For example, the destination data transmission subsystem sends, through a data access link connected to the node, the received data to a destination address specified by a user.

In general, in a data transmission process, the data transmission subsystem receives external data through the data access link, buffers the external data in an apparatus for temporary data storage, and then transmits, through the high-bandwidth data transmission link, the data buffered in the apparatus for temporary data storage. Because bandwidth of the data transmission link is far higher than bandwidth of the data access link, and the data transmission link is used to transmit the data buffered in the apparatus for temporary data storage, the buffered data can be transmitted through the data transmission link at a time in a centralized manner, to avoid mutual interference between different data streams, ensure consistently high bandwidth utilization of the data transmission link, and improve data transmission efficiency.

In addition, because the data transmission subsystem transmits the data buffered in the apparatus for temporary data storage through the high-bandwidth data transmission link, each time the data transmission subsystem transmits data, the data transmission subsystem can transmit data with a large data amount, and transmission of data with a small data amount does not occur. In this way, based on a feature of transmitting large-block data by the data transmission system, a new transmission protocol may be designed for the data transmission system. That is, a transmission mechanism of large-block data is used, so that data can be transmitted based on a data packet with a large data amount in a data transmission process, to further improve data transmission efficiency.

Optionally, the first data transmission subsystem is configured to send, when a data amount of target data buffered in the apparatus for temporary data storage is greater than a first threshold, the target data through the data transmission link connected to the first data transmission subsystem, where the target data includes data belonging to a same data transmission service. The data belonging to the same data transmission service may be data that is requested by a same user to transmit and that has a same destination address, that is, data in a same data stream.

In other words, for the data in the same data stream, the first data transmission subsystem first buffers the data in the data stream by using the apparatus for temporary data storage, and sends the buffered data to another data transmission subsystem through the data transmission link after the buffered data reaches the specific data amount, so that the high-bandwidth data transmission link can be fully loaded to a greatest extent to transmit the data in the same data stream, to ensure high bandwidth utilization of the data transmission link and improve data transmission efficiency.

Optionally, the first threshold is related to the bandwidth of the data transmission link connected to the first data transmission subsystem. Usually, the first threshold has a positive correlation relationship with the bandwidth of the data transmission link. That is, a larger bandwidth of the data transmission link indicates a larger first threshold, and a smaller bandwidth of the data transmission link indicates a smaller first threshold.

For example, the first threshold may be greater than or equal to a value of the bandwidth of the data transmission link connected to the first data transmission subsystem. For example, it is assumed that the bandwidth of the data transmission link connected to the first data transmission subsystem is 100 Gbps, which indicates that a data amount that can be transmitted by the data transmission link per second is 100 gigabytes (Gigabytes, G). In this case, the first threshold may be 100 G, 200 G, 500 G, or the like. That is, the first threshold is an integer multiple of the bandwidth of the data transmission link.

When a data amount of the same data stream is large, the first threshold related to the bandwidth of the data transmission link is set, so that the data in the same data stream is sent intermittently through the data transmission link. To be specific, the data in the same data stream is continuously transmitted through the data access link to the first data transmission subsystem for buffering, and the first data transmission subsystem triggers data transmission only when the buffered data reaches the specific amount. In this way, the first data transmission subsystem does not transmit the data in the same data stream continuously through the data transmission link, but transmits data in batches intermittently. For example, it is assumed that a data amount of a data stream is 1000 G, the bandwidth of the data transmission link connected to the first data transmission subsystem is 100 Gbps, and the first threshold is 100 G. In this case, the first data transmission subsystem triggers transmission of buffered data through the data transmission link when a buffer amount of data in the data stream reaches 100 G. In this way, the first data transmission subsystem transmits data in the same data stream 10 times through the data transmission link in total, a data amount transmitted each time is 100 G, and a transmission time is 1 second.

In another possible example, the first threshold may alternatively be related to a data amount of the data transmission service corresponding to the target data. For example, the first threshold is the same as the data amount of the data transmission service corresponding to the target data, or the first threshold is slightly less than the data amount of the data transmission service corresponding to the target data. In other words, different thresholds may be set for different data transmission services, and the specified threshold is related to a data amount that needs to be transmitted for the data transmission service. In this way, a threshold for triggering transmission is set to be equal to or slightly less than the data amount of the data transmission service, so that the data transmission subsystem transmits, after completely buffering data of the same data transmission service, the buffered data to another data transmission subsystem through the data transmission link, to ensure that as few data streams are transmitted as possible in one time period, avoid mutual interference between data streams, and ensure that the data transmission link consistently maintains high bandwidth utilization.

Optionally, when the data amount of the target data is greater than the bandwidth of the data transmission link connected to the first data transmission subsystem, the data transmission link connected to the first data transmission subsystem is used to transmit only the target data in a time period for transmitting the target data. In other words, the data transmission link is exclusively used in the transmission time period of the target data, and the data transmission link transmits only the data of the same data transmission service within the same time. This ensures that the data transmission link can be fully loaded to transmit the data of the same data transmission service, to avoid interference caused when a plurality of data streams are simultaneously transmitted, and improve data transmission efficiency of the data transmission link.

In addition, because a data read rate is usually limited by performance of a data storage device (for example, a hard disk), a rate of reading data from a single data storage device is also limited, and the bandwidth of the data transmission link is usually greater than a rate of the data storage device such as the hard disk. Therefore, in this embodiment, a plurality of data storage devices may be disposed to buffer the data in the same data stream, and the plurality of data storage devices are read in parallel during data transmission, to ensure that the data read rate can match a data transmission rate, and avoid impact on data transmission.

For example, the apparatus for temporary data storage in the first data transmission subsystem includes the plurality of data storage devices, each of the plurality of data storage devices is configured to store a part of the target data, and the first data transmission subsystem is configured to read the target data from the plurality of data storage devices in parallel and transmit the target data through the data transmission link connected to the first data transmission subsystem. In this way, a rate at which the first data transmission subsystem reads the target data is actually a sum of read rates of the plurality of data storage devices, to ensure that the data read rate can match the transmission rate of the data transmission link, and avoid impact of the data read rate on an actual data transmission rate.

Specifically, FIG. 2 is a diagram of reading data and transmitting the data through a data transmission link according to an embodiment of this application. As shown in FIG. 2, it is assumed that the apparatus for temporary data storage in the first data transmission subsystem includes five data storage devices (which are a data storage device 1 to a data storage device 5), and a data read rate of each data storage device is 20 Gbps. In addition, each data storage device stores a part of data of the same data transmission service (for example, each data storage device stores 1/5 data of the same data transmission service). In this way, when the first data transmission subsystem transmits the data in the apparatus for temporary data storage through the data transmission link, the first data transmission subsystem may read the data from the five data storage devices in parallel, aggregate the read data, and transmit the data through the same data transmission link. In this way, because the read rate of each data storage device is 20 Gbps, and the five data storage devices read the data at the same time, when the read data is aggregated to the data transmission link for transmission, the transmission rate of the data transmission link is 100 Gbps, which ensures that the transmission rate of the data transmission link can match the bandwidth of the data transmission link, and ensures that the data transmission link can be fully loaded to transmit the data.

Optionally, for any data transmission subsystem in the data transmission system, a data access link connected to the data transmission subsystem may include one or more of the following links: a wired network access link, a wireless network access link, a network dedicated line access link, and a hard disk access link.

The wired network access link may be a link that accesses a conventional Internet protocol (Internet Protocol, IP) network. Based on the wired network access link, the user may send, to the data transmission subsystem through the conventional IP network, data that needs to be transmitted based on the data transmission system.

The wireless network access link may be a link that accesses a wireless network, for example, a link that accesses a satellite or a link that accesses a wireless base station. Based on the wireless network access link, the user may send, to the data transmission subsystem through a satellite or a wireless base station, the data that needs to be transmitted based on the data transmission system.

The network dedicated line access link may be a link connected to a network dedicated line. That is, the user directly accesses the data transmission subsystem through the network dedicated line. Therefore, the user may send, to the data transmission subsystem through the network dedicated line, the data that needs to be transmitted based on the data transmission system.

The hard disk access link may be a link that provides a hard disk access port. The user may insert a hard disk into the hard disk access port provided by the data transmission subsystem, to implement access of data in the hard disk to the data transmission subsystem. In this way, the data transmission subsystem can directly read, through the hard disk access link, the data in the hard disk provided by the user.

It should be noted that the foregoing describes possible types of the data access link connected to the data transmission subsystem. For a data transmission subsystem, the data transmission subsystem may be connected to one or more of the foregoing plurality of types of links, and may be connected to one or more links of each type. For example, for the first data transmission subsystem, types of data access links connected to the first data transmission subsystem may include a wired network access link, a wireless network access link, a network dedicated line access link, and a hard disk access link, and there may be a plurality of wired network access links connected to a type of the first data transmission subsystem. That is, different users may access the first data transmission subsystem through different wired network access links. Specifically, types and a quantity of data access links connected to the data transmission subsystem are not limited in embodiments.

Optionally, when the data access link includes the hard disk access link, the first data transmission subsystem is further configured to read data through the hard disk access link and forward the read data based on the data transmission link connected to the first data transmission subsystem. In other words, when the first data transmission subsystem has the hard disk access link, the first data transmission subsystem may directly read, through the hard disk access link, data in a hard disk provided by the user, and further forward, through the data transmission link, the data read through the hard disk access link, to omit an operation of buffering the read data in the apparatus for temporary data storage. A plurality of hard disk access links may be set in the first data transmission subsystem, and the user may connect a plurality of hard disks to different hard disk access links, so that the first data transmission subsystem can read data in the plurality of hard disks in parallel through the plurality of hard disk access links, and a data read rate matches a transmission rate of the data transmission link.

It should be noted that, when the data transmission subsystem has the hard disk access link, if the user transmits data to the data transmission subsystem through the hard disk access link, the user needs to go to a location of the data transmission subsystem, and connect the hard disk to the hard disk access link, to transmit the data to the data transmission subsystem.

The foregoing describes a process in which the first data transmission subsystem receives, through the data access link, the externally injected data, and transmits the received data through the data transmission link between the first data transmission subsystem and the another data transmission subsystem. During actual application, the first data transmission subsystem may alternatively receive, through the data transmission link, data sent by another data transmission subsystem, and forward the received data to the user through the data access link.

For example, the first data transmission subsystem is further configured to receive, through the data transmission link, the data sent by the another data transmission subsystem, and forward, through the data access link, the data received through the data transmission link. For example, after receiving, through the data transmission link, the data sent by the another data transmission subsystem, the first data transmission subsystem forwards, through the data access link such as the wired network access link or the wireless network access link, the data received from the another data transmission subsystem, so that the user can receive, through the data access link such as the wired network access link or the wireless network access link, the data transmitted through the data transmission system.

Optionally, the apparatus for temporary data storage in the first data transmission subsystem is further configured to buffer the data received by the first data transmission subsystem through the data transmission link connected to the first data transmission subsystem. In other words, after the data transmitted by the user through the data transmission system reaches the destination data transmission subsystem, the data can be further buffered in a source data transmission subsystem and the destination data transmission subsystem, that is, to implement hosting of the data in the source data transmission subsystem and the destination data transmission subsystem, so that the user can retrieve the data from the source data transmission subsystem and the destination data transmission subsystem as required.

For example, when the first data transmission subsystem receives, through the data transmission link, the data transmitted by the another data transmission subsystem, the first data transmission subsystem may buffer the received data in the apparatus for temporary data storage. Then, when the first data transmission subsystem successfully buffers the data of the same data transmission service, the first data transmission subsystem sends a data retrieval notification to the user, to notify the user to retrieve the data buffered in the first data transmission subsystem. In this way, the user may retrieve the data from the first data transmission subsystem through the data access link. For example, the user receives, through the wired network access link, the data buffered in the first data transmission subsystem, or the user carries the hard disk to the first data transmission subsystem and copies, through the hard disk, the data buffered in the first data transmission subsystem.

In some possible embodiments, to facilitate scheduling of data transmission between the data transmission subsystems, a management and operation system may be further set in the data transmission system. In addition, the management and operation system is connected to the plurality of data transmission subsystems. That is, each data transmission subsystem in the data transmission system is connected to a plurality of data transmission subsystems.

After the first data transmission subsystem receives, through the data access link, first data that needs to be transmitted, and buffers the first data, the first data transmission subsystem sends a data transmission request to the management and operation system, where the data transmission request is used to request to transmit the first data, and the data transmission request includes a size of the to-be-transmitted data and a destination address of the first data. The destination address of the first data may be a destination data transmission subsystem of the first data. That is, the destination address of the first data is a data transmission subsystem in the data transmission system. The destination address of the first data may alternatively be an IP address on the Internet (for example, an IP address specified by the user when the user transmits the first data to the first data transmission subsystem).

After obtaining the data transmission request, the management and operation system sends a data reception request to a second data transmission subsystem based on the data transmission request, where the data reception request is used to request the second data transmission subsystem to receive the first data. The data reception request may indicate a size of the first data, so that the second data transmission subsystem prepares adequate buffer space for the first data based on the size of the first data. It should be noted that, when the destination address of the first data is a destination data transmission subsystem, the second data transmission subsystem is the destination data transmission subsystem of the first data; or when the destination address of the first data is an IP address on the Internet, the second data transmission subsystem may be a data transmission subsystem that is determined by the management and operation system and that can reach the destination address of the first data.

After preparing, based on the data reception request, the buffer space used to receive the first data, the second data transmission subsystem may return a data reception confirmation message to the management and operation system, where the data reception confirmation message indicates that the second data transmission subsystem confirms that the first data can be received. In this way, the management and operation system is further configured to send a data transmission instruction to the first data transmission subsystem after receiving the data reception confirmation message returned by the second data transmission subsystem, where the data transmission instruction instructs the first data transmission subsystem to transmit the first data.

Optionally, the data transmission instruction further indicates a time period in which the first data transmission subsystem transmits the first data, that is, a time period in which the first data transmission subsystem needs to transmit the first data.

Specifically, the management and operation system is responsible for scheduling data transmission in the entire data transmission system. In addition to the first data transmission subsystem requesting data transmission from the management and operation system, another data transmission subsystem may further request data transmission from the management and operation system, and a data transmission link for data transmission requested by the another data transmission subsystem may be further the same as the data transmission link for data transmission requested by the first data transmission subsystem. In view of this, the management and operation system may determine, based on a data transmission status in an actual scenario (for example, the data transmission subsystem that requests data transmission and a priority of data that each data transmission subsystem requests to transmit), a time period in which each data transmission subsystem uses a specific data transmission link to transmit the data, to ensure that the data transmission link can be exclusively used by the specific data transmission subsystem in each time period to a greatest extent, so as to improve bandwidth utilization of the data transmission link.

In general, a data scheduling center is set in the data transmission system to schedule data transmission between the data transmission subsystems, so that the data transmission subsystems can more properly use the data transmission link between each other to transmit data, to avoid mutual contention between the data transmission subsystems for data transmission link resources, effectively ensure high bandwidth utilization of the data transmission link, and improve data transmission efficiency.

In some possible embodiments, the destination address of the first data that is requested by the first data transmission subsystem to transmit includes a plurality of addresses. For example, the destination address of the first data includes a plurality of data transmission subsystems. After receiving the data transmission request, the management and operation system sends data reception requests to the plurality of data transmission subsystems based on the plurality of addresses indicated by the data transmission request. That is, the management and operation system sends the data reception requests to the plurality of data transmission subsystems corresponding to the plurality of addresses indicated by the data transmission request, to request these data transmission subsystems to receive the first data from the first data transmission subsystem. Finally, the management and operation system may indicate, based on data reception confirmation messages returned by the plurality of data transmission subsystems, the first data transmission subsystem to send the first data to the plurality of data transmission subsystems.

It may be understood that, in this solution, based on the data transmission link in the data transmission system, data received by one data transmission subsystem can be quickly transmitted to a plurality of other data transmission subsystems, to implement efficient data distribution, and meet a data distribution requirement in a specific scenario. For example, in a movie distribution scenario, a movie distribution company needs to distribute a movie to cinemas in each city. In this case, the movie distribution company may transmit digital content of the movie to a data transmission subsystem closest to the movie distribution company in advance, and then distribute the digital content of the movie to a data transmission subsystem deployed in each city through the data transmission subsystem. Then, the cinemas in each city retrieve the digital content of the movie from a nearest data transmission subsystem, to implement efficient distribution of the digital content of the movie.

For ease of understanding, the following describes in detail the data transmission system provided in embodiments of this application with reference to specific examples.

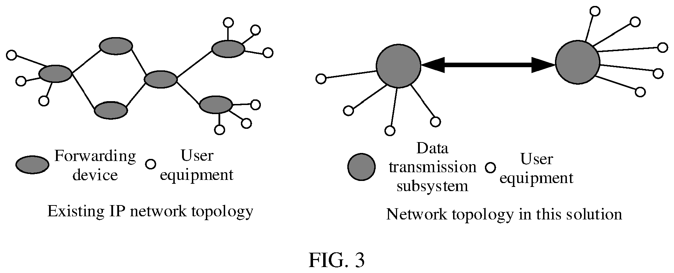

FIG. 3 is a comparison diagram of network topologies according to an embodiment of this application. As shown in FIG. 3, a network topology shown on a left side of FIG. 3 is an existing IP network topology, and a network topology shown on a right side of FIG. 3 is a network topology of the data transmission system provided in this solution.

Specifically, the existing IP network topology is designed for connection, mainly for small data transmission such as texts, languages, and videos, and emphasizes elements such as real-time performance, a low delay, and certainty. However, during transmission of a large amount of data, the existing IP network topology cannot meet a requirement. The existing IP network topology is actually a tree-shaped networking mode, and a large quantity of different types of network devices, such as an access device, a switch, a router, and a transmission device, are required intermediately for networking to implement data forwarding. Therefore, in a long-distance transmission process, data undergoes a plurality of transformations between intermediate protocols, and undergoes table lookup and forwarding performed by a large quantity of forwarding devices. In addition, different data streams further compete for bandwidth resources, which results in low bandwidth utilization of a network and low data transmission efficiency.

In view of this, a network topology design of the data transmission system provided in this solution is more simplified, so that a quantity of network node hops can be reduced, and direct reaching of data at a physical path layer can be implemented. Specifically, data transmission subsystems in the data transmission system are directly connected to each other through a backbone optical fiber, and a bandwidth can reach 100 G, 400 G, 800 G, 1600 G, or the like.

Usually, the data transmission subsystem is mainly constructed in an area in which data is transmitted in a centralized manner, and a data amount of a data stream can reach at least hundreds of G. That is, the data transmission subsystem can implement data aggregation and transmission. For example, the data transmission subsystem is deployed in cities such as Beijing, Shanghai, Shenzhen, Guangzhou, Hangzhou, and Guiyang in which a large amount of data is transmitted in a centralized manner. In addition, a scale of the data transmission subsystem may be adjusted based on the data amount. For example, the data transmission subsystem may be constructed in a cluster mode or in a form of standalone device.

In addition, in a use process of the data transmission system, a large amount of data is actually aggregated to the data transmission subsystem, and then the data transmission subsystem transmits the aggregated large amount of data to another data transmission subsystem through a high-rate data transmission link. Therefore, the data transmission subsystem actually has a feature of aggregating data and then performing centralized transmission. That is, a concept of the data transmission subsystem is similar to that of a port in transportation. Therefore, the data transmission subsystem may also be referred to as a "data port".

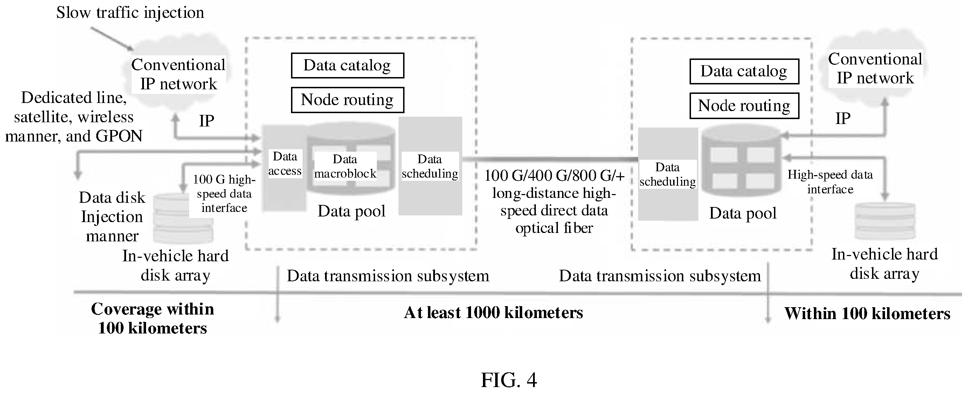

For example, FIG. 4 is a diagram of a structure of a data transmission subsystem according to an embodiment of this application. As shown in FIG. 4, the data transmission subsystem in a data transmission system includes a plurality of components, which are a data access component, a data catalog, node routing, a data pool, and a data scheduling component.

The data access component is a component that provides a data access link and is responsible for managing data access, and can provide a plurality of data access manners for the data transmission subsystem through the data access link. Specifically, a manner of accessing the data transmission subsystem by data may include, for example, a conventional IP network. That is, the data is slowly injected into the data pool of the data transmission subsystem through the IP network. For example, the manner of accessing the data transmission subsystem by the data may further include access manners (that is, the data access links in the foregoing embodiments) such as network dedicated line access, satellite access, wireless base station access, hard disk access, and a gigabit capable passive optical network (Gigabit Capable Passive Optical Network, GPON). Usually, an access bandwidth of the data access manner provided by the data access component is lower than a bandwidth of a link between data transmission subsystems. Therefore, data injected into the data transmission subsystem through the data access component needs to be buffered in the data pool of the data transmission subsystem, and data transmission starts to be performed in an intermittent manner after the data is adequate to support the bandwidth of the link between data transmission subsystems.

The data catalog is a component that manages data in the data transmission subsystem, mainly including local management systems for a data size, a data storage location, data encryption, data compression, and the like. The data catalog is similar to a file system. Specifically, the data catalog receives the data injected by the data access component, and allocates a data macroblock to the data in the data pool, to store the data in the data pool. The data catalog further manages the data pool and provides a data address handle for data scheduling to implement high-speed data transmission. In addition, the data catalog further provides data access permission control. That is, only a user with permission is allowed to access data buffered in the data pool. The data catalog further provides data lifecycle management, that is, monitors data buffer duration and periodically deletes data whose buffer duration reaches a specific threshold.

The data pool is an area (that is, the apparatus for temporary data storage in the foregoing embodiment) that is in the data transmission subsystem and that is used to buffer data, and is essentially a network-based cluster storage pool. The data pool actually includes a plurality of data macroblocks. A size of a data macroblock may be 1 GB, 10 GB, 100 GB, or even a larger data amount. In addition, the data macroblock is a logical concept, and the data macroblock actually includes a plurality of physical storage units, and the plurality of physical storage units may be deployed on different physical nodes. That is, the plurality of physical storage units are located on different data storage devices, and each physical storage unit may be a part of storage units on a data storage device to which the physical storage unit belongs. In this way, a data macroblock can implement data read or write in parallel, and provides high data write and read rates.

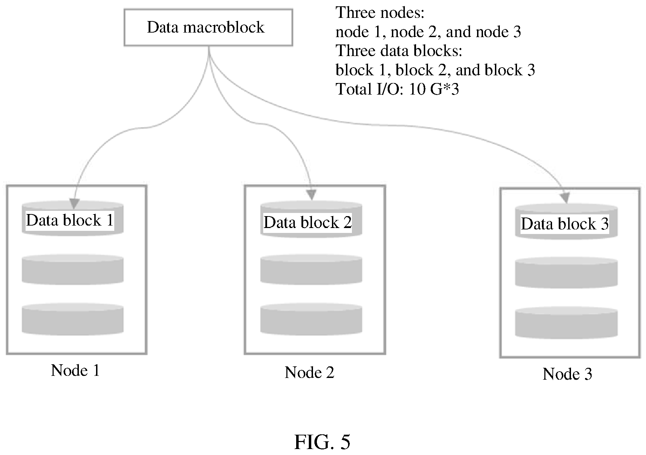

Specifically, a definition of the data macroblock may include a storage node, an input/output (Input/Output, I/O) rate, an I/O concurrency rate, and a data block size. For example, FIG. 5 is a diagram of a data macroblock according to an embodiment of this application. As shown in FIG. 5, the data macroblock has three storage areas (which are a data block 1, a data block 2, and a data block 3), and the three storage areas are located at a node 1, a node 2, and a node 3. When data in the data macroblock needs to be sent, the data may be synchronously read from or written into the node 1, the node 2, and the node 3 in parallel, to implement high-speed data migration. A read rate of each of the node 1, the node, and the node 3 is 10 Gbps. Through parallel reading from the three nodes, a parallel read rate of the data macroblock can be 10 Gbps*3=30 Gbps. In general, in the data pool, it is set that the data macroblock includes physical storage units on a plurality of different physical nodes, so that data can be aggregated level by level, and it is ensured that a read rate of the entire data macroblock is consistent with a transmission rate of a data transmission link.

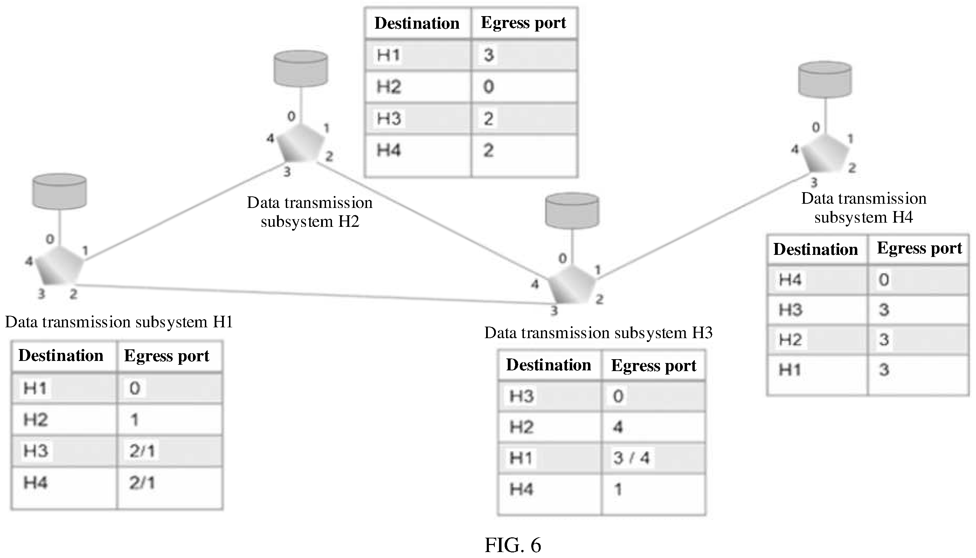

Node routing is used to be responsible for managing and scheduling a route between data transmission subsystems, and configuring a route to each data transmission subsystem, to implement direct reaching from a source data transmission subsystem to a destination data transmission subsystem. For example, FIG. 6 is a diagram of node routing according to an embodiment of this application. As shown in FIG. 6, each data transmission subsystem may be represented by using a specific number, IP address, character string, or the like. In addition, an egress port for going to any other data transmission subsystem from a current data transmission subsystem can be recorded in node routing, to indicate a data transmission path. In general, node routing needs to maintain information similar to a routing table and a large time-slice scheduling mechanism, to complete transmission path planning. Reachability between data transmission subsystems is implemented by using a local routing table maintained by each data transmission subsystem.

Data scheduling means implementing data read or write based on an optical network status and data macroblock information provided by the data catalog, and completing a transformation of read data in terms of a network protocol. Usually, the data scheduling module includes data read, data transmission, data transmission reliability processing and the like, and cooperation and interaction between a data scheduling module of a current data transmission subsystem and a data scheduling module of a destination data transmission subsystem, to complete migration of data to a specified data area of a peer end.

The foregoing describes composition of the data transmission subsystem. The following describes a process of injecting external data into the data transmission subsystem and transmitting the external data in the data transmission system through the data transmission subsystem.

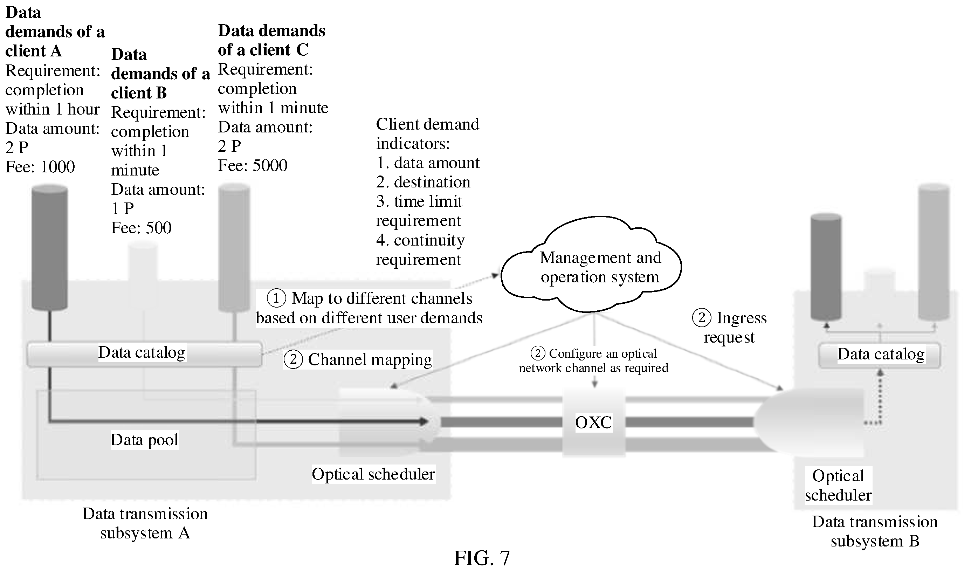

For example, FIG. 7 is a diagram in which a user submits data to a data transmission subsystem for transmission according to an embodiment of this application. As shown in FIG. 7, the user who needs to transmit the data through a data transmission system may inject, into the data transmission subsystem in a data access manner provided by the data transmission subsystem, the data that needs to be transmitted, and submit a data transmission demand to the data transmission subsystem. The data transmission demand may include, for example, a data amount of the data that needs to be transmitted, a data destination, a time limit requirement for data transmission (that is, a time within which data transmission needs to be completed), and a data continuity requirement (that is, a time for which the data needs to be retained after reaching a destination data transmission subsystem).

After the data transmission demand of the user, the data transmission subsystem first allocates a storage resource in a data pool to the data that needs to be transmitted by the user, and then receives, through a data access link, the data injected by the user into the data transmission subsystem. After the data of the user is completely injected into the data transmission subsystem, a data scheduling component in the data transmission subsystem may apply for a transmission link through a management and operation system based on the data transmission demand of the user and a status of an optical fiber network, to enable a physical network channel and start data transmission.

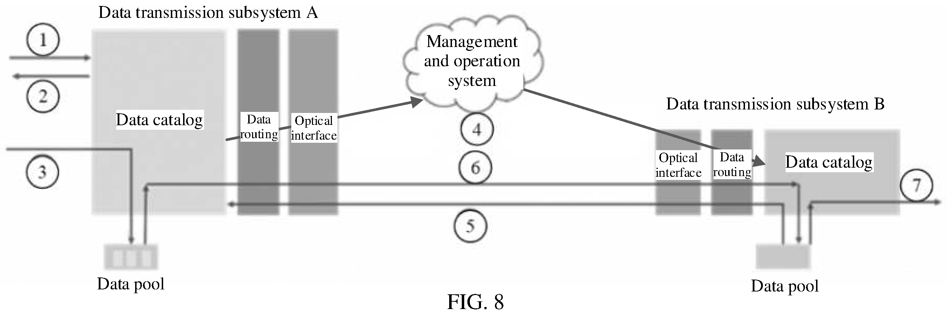

For example, FIG. 8 is a diagram of data transmission in a data transmission system according to an embodiment of this application. As shown in FIG. 8, a process of transmitting data submitted by a user in the data transmission system includes the following step 1 to step 7.

Step 1: The user sends a data transmission demand to a data transmission subsystem A, where the data transmission demand may specifically include: a destination data transmission subsystem of data, a data size, a data transmission time requirement, a data access manner (for example, an IP network, a network dedicated line, or an in-vehicle disk array), a data storage period, and whether a third party is authorized for use.

Step 2: The data transmission subsystem A determines, based on the data transmission demand sent by the user, whether a data transmission request of the user can be accepted. When the data transmission subsystem A determines to accept the data transmission request of the user, the data transmission subsystem A allocates a storage resource in a data pool to the data that needs to be transmitted by the user, and returns a response message to the user, to notify the user to transmit the data to the data transmission subsystem A.

Step 3: After obtaining the response message returned by the data transmission subsystem A, the user may transmit, to the data transmission subsystem A through a data access link provided by the data transmission subsystem A, the data that needs to be transmitted. For example, the user sends the data to the data transmission subsystem through the IP network or the network dedicated line; or the user drives a vehicle to a location of the data transmission subsystem A, and connects an in-vehicle hard disk array to a hard disk access link provided by the data transmission subsystem A, to inject the data into the data transmission subsystem A.

Step 4: When the data that the user requests to transmit is completely injected or is to be completely injected into the data pool in the data transmission subsystem A, the data transmission subsystem A sends a data transmission request to a management and operation system, where the data transmission request includes information such as the destination data transmission subsystem (for example, a data transmission subsystem B) of the data, the data size, and data processing permission. After receiving the data transmission request, the management and operation system sends a data reception request to the data transmission subsystem B, to request the data transmission subsystem B to allocate storage space to data to be transmitted.

Step 5: After allocating the storage space to the data, the data transmission subsystem B may send a data reception confirmation message to the management and operation system and the data transmission subsystem A, to indicate that the data transmission subsystem B is ready to receive the data. Then, the management and operation system may send a data transmission instruction to the data transmission subsystem A according to a scheduling strategy, to instruct the data transmission subsystem A to transmit the data, and the data transmission instruction may further indicate a time period in which the data transmission subsystem A transmits the data.

Step 6: The data transmission subsystem A starts data transmission, and transmits data buffered in the data pool to the data transmission subsystem B. In a data transmission process, the data is sent by using a data macroblock as a scheduling unit, and data retransmission and multi-path data sending are scheduled by using a data block as a unit. That is, each time the data transmission subsystem B receives a data macroblock, the data transmission subsystem B initiates a data integrity check. If a data block is lost, the data transmission subsystem B initiates a retransmission request, to retransmit a data block and avoid retransmitting the entire data macroblock. The data macroblock is a basic unit for data scheduling between data transmission subsystems. A plurality of data macroblocks form a user transmission task, and a data macroblock needs to be transmitted in a time slice unit.

In addition, data pools (that is, apparatuses for temporary data storage) in the data transmission subsystem A and the data transmission subsystem B use high-speed storage devices. In this way, a process of data migration between conventional central processing units (Central Processing Units, CPUs) can be converted into data migration between the high-speed storage devices, and direct data transfer between media can even be used to improve data transmission efficiency.

Step 7: After data transmission is completed, the data transmitted by the data transmission subsystem A is buffered in the data pool of the data transmission subsystem B, and the data transmission subsystem B may send a data retrieval notification to the user, to notify the user to retrieve the data buffered in the data transmission subsystem B. For example, the user may retrieve the data from the data transmission subsystem B through a data access link (for example, an IP network, a network, or a hard disk access link) in the data transmission subsystem B.

In addition, after the user retrieves the data from the data transmission subsystem B, the data transmission subsystem B may further perform operations such as saving, deleting, and distributing the data based on configuration of the user, which is not specifically limited in embodiments.

The following describes a specific application scenario in which data transmission is implemented through the data transmission system provided in this embodiment.

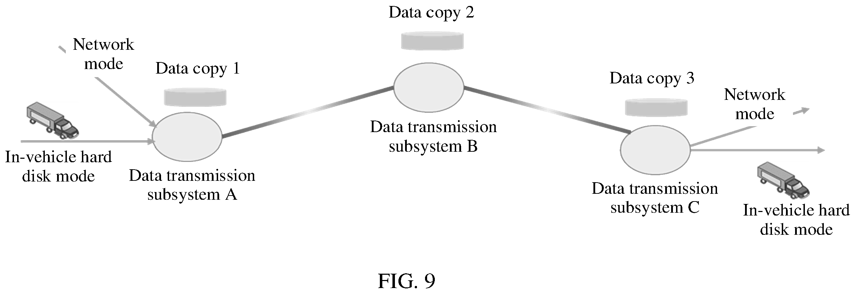

FIG. 9 is a diagram of data transmission in an "eastern data, western computing" scenario according to an embodiment of this application. In a specific scenario of "eastern data, western computing", data generated in an eastern city usually needs to be migrated to a data center in a western city for computing. As shown in FIG. 9, a user may inject a large amount of data that needs to be transmitted into a data transmission subsystem A in a network mode (for example, an IP network or a network dedicated line) or an in-vehicle hard disk mode, so that the data transmission subsystem A can buffer a data copy 1. Then, the data transmission subsystem A may send the buffered data copy 1 to a destination data transmission subsystem (for example, a data transmission subsystem C) according to a data transmission demand of the user. The data transmission subsystem C receives and buffers the data sent by the data transmission subsystem A to obtain a data copy 3. In this way, in the data transmission subsystem C, the user may retrieve the data from the data transmission subsystem C in the network mode or the in-vehicle hard disk mode.

In addition, in a process of transmitting the data in a data transmission system, a data transmission subsystem (for example, a data transmission subsystem B between the data transmission subsystem A and the data transmission subsystem C) along a path may back up the data, that is, to obtain a data copy 2, so that the data copy 2 can be used in an area in which the data transmission subsystem B is located.

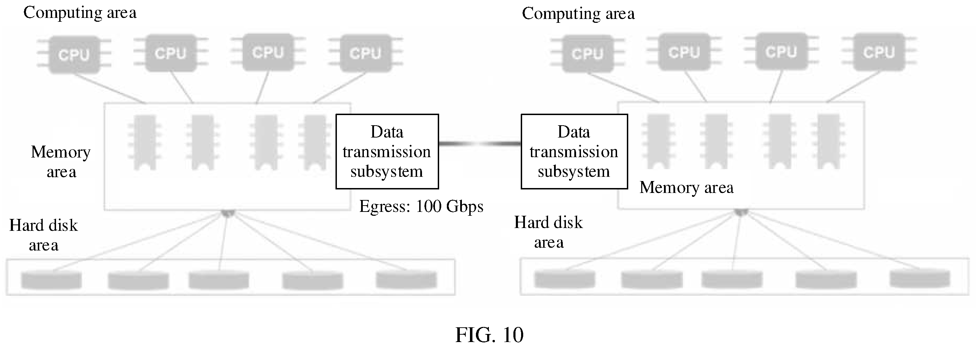

FIG. 10 is a diagram of data transmission in a data center interconnection scenario according to an embodiment of this application. As shown in FIG. 10, in the data center interconnection scenario, a data transmission subsystem is mainly deployed at an edge of a data center, and is interconnected with a data transmission subsystem in a remote data center. In this scenario, the data transmission subsystem may only have a data scheduling component. An existing memory pool and hard disk area of the data center may be reused as a data pool, and a data catalog may be deployed on a CPU of a computing area. In this way, data that needs to be transmitted between the data centers is first synchronized to the data pool in a memory area, and then scheduled from the data pool to a data transmission center for transmission.

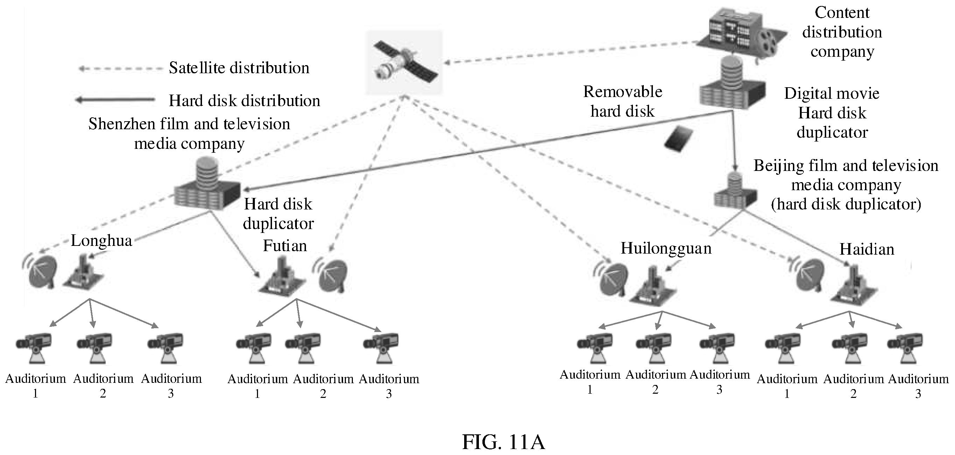

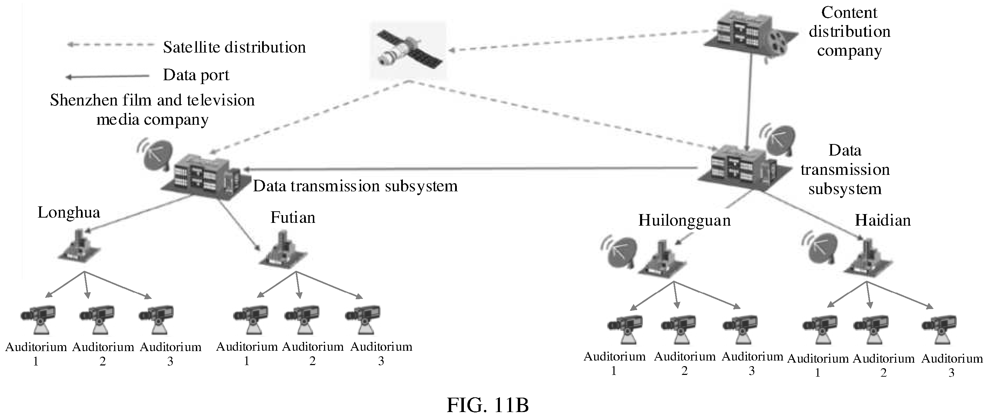

Refer to FIG. 11A and FIG. 11B. FIG. 11A is a diagram of conventional digital content delivery according to an embodiment of this application. FIG. 11B is a diagram of implementing data content delivery based on a data transmission system according to an embodiment of this application. As shown in FIG. 11A, in a conventional process of distributing digital content, for example, distributing a digital movie to each city, a digital movie is at least about 200 G, and distribution is mainly implemented through a satellite and a removable hard disk. A satellite distribution manner has limitations to some extent. For example, construction of a satellite receiving station in a cinema may face a property management restriction. Consequently, some cinemas cannot receive the digital movie through the satellite. In addition, the satellite distribution manner is greatly affected by climate, and is characterized by unidirectional transmission and a low bandwidth. In a removable hard disk distribution manner, a large quantity of removable hard disks are required to copy the digital movie, and the removable hard disks are sent by express delivery. As a quantity of cinemas increases, more removable hard disks need to be used to copy the digital movie, which results in low efficiency and failure to digitize an entire process.

As shown in FIG. 11B, when the data transmission system provided in embodiments of this application is used to distribute the digital content, a content distribution company only needs to transmit the digital content to a nearest data transmission subsystem, and then the data transmission subsystem may transmit the digital content to one or more specified data transmission subsystems based on authorization of the content distribution company, for example, transmit the digital content to a data transmission subsystem of each provincial capital city in the country, so that digital content of at least 200 G can be distributed to each data transmission subsystem within several minutes. In this way, the data transmission subsystem that receives the digital content distributes the digital content locally level by level, to quickly distribute the digital content to a specified destination, for example, distribute the digital content to cinemas in each city.

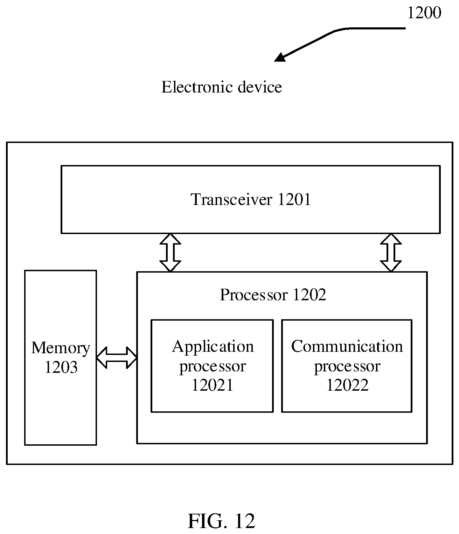

FIG. 12 is a diagram of a structure of an electronic device according to an embodiment of this application. The electronic device 1200 shown in FIG. 12 may be, for example, the data transmission subsystem in the foregoing embodiments. Specifically, the electronic device 1200 includes a transceiver 1201, a processor 1202, and a memory 1203 (where there may be one or more processors 1202 in the electronic device 1200, and one processor is used as an example in FIG. 12). The processor 1202 may include an application processor 12021 and a communication processor 12022. In some embodiments of this application, the transceiver 1201, the processor 1202, and the memory 1203 may be connected through a bus or in another manner.

The memory 1203 may include a read-only memory and a random access memory, and provides instructions and data to the processor 1202. A part of the memory 1203 may further include a non-volatile random access memory (non-volatile random access memory, NVRAM). The memory 1203 stores a processor and operation instructions, an executable module or a data structure, a subset thereof, or an extended set thereof. The operation instructions may include various operation instructions for implementing various operations.

The processor 1202 controls an operation of the electronic device. During specific application, various components of the electronic device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 1202, or may be implemented by the processor 1202. The processor 1202 may alternatively be an integrated circuit chip and has a signal processing capability. In an implementation process, the steps in the foregoing methods may be completed by using an integrated logic circuit of hardware in the processor 1202 or by using instructions in a form of software. The processor 1202 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1202 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 1203. The processor 1202 reads information from the memory 1203 and completes the steps in the foregoing methods in combination with the hardware of the processor 1202.

The transceiver 1201 (for example, a network adapter) may be configured to: receive input digit or character information, and generate a signal input related to a related setting and function control of the electronic device. The transceiver 1201 may be further configured to: output the digit or character information through a first interface, and send instructions to a disk group through the first interface, to modify data in the disk group. The transceiver 1201 may further include a display device such as a display.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of analog circuit, digital circuit, or dedicated circuit. However, as for this application, a software program implementation is a better implementation in most cases. Based on such an understanding, the technical solutions of this application essentially or the part contributing to the conventional technology may be implemented in a form of software product. The computer software product is stored in a readable storage medium, for example, a computer floppy disk, a USB flash drive, a removable hard disk, a ROM, a RAM, a magnetic disk, or an optical disc, and includes several instructions for instructing a computer device to perform the methods described in embodiments of this application.

All or some of the foregoing embodiments may be implemented by using software, hardware, firmware, or any combination thereof. When software is used to implement the embodiments, all or a part of the embodiments may be implemented in a form of computer program product.

It should be understood that "one embodiment" or "an embodiment" mentioned throughout the specification means that specified features, structures, or characteristics related to the embodiment are included in at least one embodiment of this application. Therefore, "in one embodiment" or "in an embodiment" appearing throughout the specification does not necessarily mean a same embodiment. In addition, these particular features, structures, or characteristics may be combined in one or more embodiments in any appropriate manner. It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data transmission system, comprising a plurality of data transmission subsystems, wherein the plurality of data transmission subsystems are connected to each other through a data transmission link;
a first data transmission subsystem of the plurality of data transmission subsystems is further connected to a data access link data transmission subsystem; and
the first data transmission subsystem comprises an apparatus for temporary data storage, wherein the apparatus for temporary data storage is configured to buffer data received through the data access link, and the first data transmission subsystem is used to send, through a data transmission link connected to the first data transmission subsystem, the data buffered in the apparatus for temporary data storage.

2. The system according to claim 1, wherein the first data transmission subsystem is configured to send, when a data amount of target data buffered in the apparatus for temporary data storage is greater than a first threshold, the target data through the data transmission link connected to the first data transmission subsystem, wherein the target data comprises data belonging to a same data transmission service.

3. The system according to claim 2, wherein the apparatus for temporary data storage comprises a plurality of data storage devices, each of the plurality of data storage devices is configured to store a part of the target data, and the first data transmission subsystem is configured to read the target data from the plurality of data storage devices in parallel and transmit the target data through the data transmission link connected to the first data transmission subsystem.

4. The system according to claim 2 or 3, wherein the first threshold is related to a bandwidth of the data transmission link connected to the first data transmission subsystem.

5. The system according to any one of claims 2 to 4, wherein when the data amount of the target data is greater than the bandwidth of the data transmission link connected to the first data transmission subsystem, the data transmission link connected to the first data transmission subsystem is used to transmit only the target data in a time period for transmitting the target data.

6. The system according to any one of claims 1 to 5, wherein the data transmission system further comprises a management and operation system, and the management and operation system is connected to the plurality of data transmission subsystems;
the first data transmission subsystem is configured to send a data transmission request to the management and operation system, wherein the data transmission request is used to request to transmit first data, and the data transmission request comprises a size of the first data and a destination address of the first data;
the management and operation system is configured to send a data reception request to a second data transmission subsystem based on the data transmission request, wherein the data reception request is used to request the second data transmission subsystem to receive the first data; and
the management and operation system is further configured to send a data transmission instruction to the first data transmission subsystem after receiving a data reception confirmation message returned by the second data transmission subsystem, wherein the data transmission instruction instructs the first data transmission subsystem to transmit the first data.

7. The system according to claim 6, wherein the destination address of the first data comprises a plurality of addresses; and
the management and operation system is configured to send data reception requests to a plurality of data transmission subsystems based on the data transmission request.

8. The system according to claim 6 or 7, wherein the first data transmission subsystem is further configured to obtain a data transmission instruction delivered by a user, the data transmission instruction instructs to transmit the first data, and the data transmission instruction comprises the size of the first data, the destination address of the first data, a transmission time point of the first data, a transmission time limit of the first data, and authorized-hosting information of the first data; and
the first data transmission subsystem is further configured to determine a transmission priority of the first data based on the transmission time point and the transmission time limit.

9. The system according to any one of claims 6 to 8, wherein the second data transmission subsystem is further configured to send a data retrieval notification after receiving the first data, and the data retrieval notification instructs the user to retrieve the first data from the second data transmission subsystem.

10. The system according to any one of claims 1 to 9, wherein the data transmission link between the plurality of data transmission subsystems is an optical transport network OTN link.

11. The system according to any one of claims 1 to 10, wherein the data access link comprises one or more of the following links: a wired network access link, a wireless network access link, a network dedicated line access link, and a hard disk access link.

12. The system according to claim 11, wherein when the data access link comprises the hard disk access link, the first data transmission subsystem is further configured to read data through the hard disk access link and forward the read data based on the data transmission link connected to the first data transmission subsystem.

13. The system according to any one of claims 1 to 12, wherein the first data transmission subsystem is further configured to receive, through the data transmission link connected to the first data transmission subsystem, data sent by another data transmission subsystem, and forward, through the data access link, the data received through the data transmission link connected to the first data transmission subsystem.

14. The system according to claim 13, wherein the apparatus for temporary data storage is further configured to buffer the data received through the data transmission link connected to the first data transmission subsystem.

15. The system according to any one of claims 1 to 14, wherein a bandwidth of the data access link is lower than the bandwidth of the data transmission link connected to the first data transmission subsystem.
